Europäisches Patentamt

European Patent Office

Office européen des brevets

(19)

(11) Numéro de publication: **0 165 105**
**B1**

(12) **FASCICULE DE BREVET EUROPEEN**

(45) Date de publication du fascicule du brevet:
14.09.88

(21) Numéro de dépôt: 85400861.2

(22) Date de dépôt: 03.05.85

(51) Int. Cl.⁴: **A 23 C 9/154**, A 23 C 9/142,
A 23 C 9/146

(54) Procédé de fabrication d'un produit laitier acidifié et concentré apte à la gélification et au fouettage pour la préparation des desserts lactés acidifiés.

(30) Priorité: 03.05.84 FR 8406875

(43) Date de publication de la demande:
18.12.85 Bulletin 85/51

(45) Mention de la délivrance du brevet:
14.09.88 Bulletin 88/37

(84) Etats contractants désignés:
AT BE CH DE GB IT LI NL SE

(56) Documents cités:
DE - A - 2 155 696
FR - A - 2 232 999
FR - A - 2 439 554
FR - A - 2 461 461
FR - A - 2 529 758
GB - A - 1 362 502

FOOD SCIENCE & TECHNOLOGY ABSTRACTS, no.
81-08-P1322 (81044136); M. HERRMANN et al.:
"Gedanken zur Gewinnung und Verwendung von
Molkenproteinen - Quarkähnliche Dessertprodukte", &
Deutsche Molkerei-Zeitung, vol. 101, no. 48, p.
1788-1790 (1980)
CHEMICAL ABSTRACTS, volume 90, no. 15, 9 avril 1979,
page 503, abrégé 119845c, Columbus, Ohio, US; A.
PIERRE et al.: "Effects of heat treatment on the

(73) Titulaire: **LAITERIES E. BRIDEL Société anonyme dite:,
B.P. No 5, F-35240 Retiers (FR)**

(72) Inventeur: **Barbier, Jean-Pierre, Le Pre Noe Noyal
S/Seiche, F-35230 St. Erblon (FR)**
Inventeur: **Rialland, Jean-Paul, Le Champ Long,
F-35240 Retiers (FR)**

(74) Mandataire: **Doan, Dinh-Nam et al, Cabinet BEAU DE
LOMENIE 55, rue d'Amsterdam, F-75008 Paris (FR)**

(56) Documents cités: (suite)
physicochemical properties of retentates obtained by
ultrafiltration of cow and goat milk. II. Changes in the
rheological properties of cow's milk", & Lait, 1978,
58(579-580), 575-594
CHEMICAL ABSTRACTS, volume 90, no. 19, mai 1979,
page 468, abrégé 150382y, Columbus, Ohio, US; P.
KELLY: "Foaming properties of milk protein
concentrate prepared by ultrafiltration", & Ir. J. Food
Sci. Technol. 1978, 2(2), 93-104

Le dossier contient des informations techniques
présentées postérieurement au dépôt de la demande et
ne figurant pas dans le présent fascicule.

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne un procédé de fabrication d'un produit laitier acidifié concentré apte à la gélification et au fouettage notamment pour la production de desserts laitiers aromatisés gélifiés de longue conservation.

On connaît de nombreux produits laitiers acidifiés aromatisés constitués par les yaourts et les fromages blancs auxquels sont incorporés des fruits ou des extraits de fruits pour réaliser l'aromatisation. Toutefois, ces produits ne présentent pas de texture gélifiée et leur durée de conservation est très limitée dans le temps. Le pH de ces produits atteint, après fermentation lactique, une valeur généralement comprise entre 3,8 et 5,0, ce qui lui confère une certaine stabilité dans le temps. Leur texture particulière est due principalement au brassage du coagulum de caséine précipitée près du point isoélectrique. Par ailleurs, on connaît également des produits laitiers gélifiés traditionnels préparés par addition de matières amylacées ou d'agents gélifiants tels que carraghénates, alginates, gomme de guar, gomme de caroube, carboxyméthylcellulose, gomme xanthane, au lait naturel à pH neutre. La structure gélifiée est obtenue après refroidissement du produit.

Toutefois, l'aromatisation n'est possible, compte-tenu de la neutralité du milieu, qu'avec un nombre limité d'arômes tels que le cacao, le caramel, la vanille, le café.

La préparation de laits gélifiés aromatisés acidifiés se heurte au problème de l'instabilité des caséines du lait coagulables en milieu acide, empêchant toute possibilité de création d'une structure continue gélifiée.

Certes, l'addition d'agents stabilisants, tels que la carboxyméthylcellulose ou la pectine, permet de conférer une structure gélifiée à des produits laitiers acides contenant de la caséine. La caséine, bien qu'elle soit précipitée dans le milieu acide, est maintenue en suspension fine dans le liquide gélifié par la présence du stabilisant. L'acidification de ces produits est réalisée généralement par fermentation lactique ou addition d'acide alimentaire. Ces procédés nécessitent la mise en œuvre de technologies longues et complexes.

Le brevet GB-A-1 362 502 décrit un procédé de fabrication de produits secs à base de protéines laitières par:
– acidification d'un produit laitier contenant de la caséine précipitée à une valeur inférieure au point isoélectrique de la caséine, par addition d'un dérivé laitier acidifié,
– mise en dispersion ou en dissolution du mélange,
– éventuellement concentration dudit mélange,
– et séchage.

Le brevet allemand DE-A-2 155 696 décrit les conditions optimales de pH et de température pour obtenir une bonne ultrafiltration du lactosérum:
– réglage du pH à une valeur inférieure au point isoélectrique de la caséine,

– chauffage à une température de 40 à 65°C.

L'article dans Food Science and technology Abstracts N°81–08-p1322 (81 044 136) Gedanken zur Gewinnung und Verwendung von Molkenproteinen, décrit des concentrats d'ultrafiltration à 17% de solides totaux obtenus à partir d'un mélange à 20% de lait écrémé et 80% de lactosérum doux; ces concentrats donnent un gel ou coagulum par chauffage à 70°C et à 90°C, coagulum qui peut être fouetté avec divers additifs.

La présente invention a donc pour objet un procédé de fabrication d'un produit laitier acidifié contenant de la caséine soluble et apte à la gélification et au fouettage, sans utilisation d'additifs tels que matières amylacées, agents gélifiants, agents stabilisants.

Ledit procédé comporte les étapes suivantes:
– une étape d'acidification du lait jusqu'à un pH inférieur ou égal à 3,8, ladite acidification étant réalisée par échange d'ions avec une résine échangeuse de cations sous forme H+, soit à une température de 0° à 4°C, soit en présence d'un fond de cuve constitué par du lait préalablement acidifié à un pH inférieur à 3,8,
– suivie d'une étape de concentration du produit acidifié obtenu jusqu'à une teneur en matières protéiques d'au moins 45 g/kg et pouvant atteindre 100 g/kg, ladite concentration étant réalisée par ultrafiltration ou par osmose inverse.

Le lait de départ inclut du lait de vache entier, ou écrémé, totalement ou partiellement, ou du babeurre.

L'acidification est réalisée de façon à ne pas précipiter la caséine du lait.

On évite également l'adjonction de matières étrangères au lait, comme décrit dans la demande de brevet français n° 8 008 644 et dans la demande de deuxième addition à ladite demande n° 8 212 126.

De préférence, l'acidification est conduite pour amener le pH du produit laitier entre 2,5 et 3,8 et mieux encore, entre 3,0 et 3,5; zone dans laquelle l'aptitude à la gélification du produit est maximale.

La concentration par ultrafiltration est préférée car elle permet en même temps l'élimination d'une quantité de sels minéraux rendant le produit moins salé et permettant une plus grande facilité d'aromatisation.

La concentration est conduite pour amener la teneur en protéines du lait à une valeur pouvant atteindre 100 g/kg de lait. De préférence, la concentration en protéines est comprise entre environ 45 et 80 g/kg correspondant à une concentration volumétrique par ultra-filtration de 1,5 à 2,5 environ.

Le produit laitier acidifié et concentré peut être redilué avec de l'eau pour obtenir une teneur standardisée de protéines dans le milieu tout en conservant l'aptitude à la gélification.

De même, le produit laitier acidifié et concentré peut être transformé en poudre par les procédés traditionnel de dessication pour fournir une base pulvérulente pour desserts lactés gélifiés et foisonnés. On peut également hydrolyser le lac-

2

tose du produit laitier en glucose pour améliorer le pouvoir sucrant du lactose, préalablement ou postérieurement à l'opération de concentration. Cette possibilité est particulièrement intéressante pour la préparation de desserts lactés destinés à des personnes alactasiques.

Le gélification réversible du produit laitier acidifié et concentré est obtenue par application d'un traitement thermique à une température de 60°C à 145°C. La durée de conservation du produit peut être améliorée par l'application d'un traitement thermique suffisant pour bloquer toute prolifération bactérienne dans un milieu dont le pH acide joue déjà un certain rôle inhibiteur de la croissance bactérienne.

La gélification et la longue conservation sont obtenues pour une durée du traitement thermique allant de 30 minutes pour une température de 60°C à quelques secondes pour une température de 145°C; de préférence, les traitements thermiques sont réalisés entre 90°C et 125°C pendant 5 à 30 secondes.

D'une manière générale, on procède de la manière suivante:

– le produit laitier contenant de la caséine est acidifié à une valeur de pH de préférence entre 3,0 et 3,5 par échange d'ions avec une résine échangeuse de cations sous forme H⁺ ou par mélange de lait décationisé par échange d'ions dont le pH est voisin de 2,5 avec une quantité suffisante de produit laitier non traité contenant de la caséine dont le pH est généralement compris entre 6,4 et 6,8, pour atteindre un pH final compris entre 3,0 et 3,5,

– le produit laitier ainsi acidifié est soumis à un traitement d'ultra-filtration à une température comprise entre 8 et 55°C jusqu'à une concentration volumétrique comprise entre 1,5 et 2,5,

– après aromatisation par addition de fruits, de jus de fruits au concentré de jus de fruits, d'arômes naturels ou artificiels et de sucre en quantités suffisantes. Le produit laitier acidifié aromatisé est traité thermiquement de préférence à une température comprise entre 90 et 125°C pendant 5 à 30 secondes pour assurer la gélification et la longue conservation du produit. Après conditionnement aseptique et refroidissement, le produit présente une structure gélifiée continue sans précipitation de caséine.

Le produit gélifié peut être soumis à un fouettage au cours duquel il se fluidifie. Après battage, il se présente sous forme d'une mousse dont la fermeté est assurée après repos de quelques minutes. Le taux de foisonnement peut atteindre un facteur de 6, en fonction du taux de concentration et du niveau de traitement thermique appliqués.

En résumé, le produit laitier, lorsqu'il a été acidifié à un pH inférieur ou égal à 3,8, peut être concentré à une température supérieure à 4°C, sans qu'il y ait précipitation de la caséine qu'il contient.

La concentration du produit laitier acidifié, dans l'intervalle de concentration indiqué confère à ce produit une aptitude à la gélification.

Le traitement thermique du produit laitier acidifié et concentré, dans l'intervalle de température indiqué donne au dit produit une structure gélifiée continue et une longue durée de conservation.

On décrit l'invention dans l'exemple non limitatif qui suit, destiné à illustrer l'invention sans en limiter la portée.

Exemple 1
Préparation d'un lait acidifié gélifié foisonnable
a- Lait acidifié et concentré

1,5 litres de lait préalablement acidifié à pH 2,3 par échange d'ions avec une résine échangeuse de cations sous forme H⁺ «Duolite C26»® à une température de 2°C sont mélangés avec 0,5 l de lait écrémé ordinaire. Le pH du mélange est de 3,4.

Le lait acidifié maintenu à 10°C est soumis à une ultra-filtration sur une cartouche «Amicon» type «HA P 10–20», jusqu'à un facteur de concentration volumique de 1,5. On obtient ainsi 1,33 l de rétentat d'ultra-filtration.

b- Traitement thermique
Le rétentat obtenu est réparti en flacons de 200 ml et soumis aux traitements thermiques suivants:

1er lot de deux flacons à 63°C pendant 30 minutes,

2nd lot de deux flacons à 100°C pendant 10 secondes.

Après refroidissement à 10°C, le rétentat traité thermiquement présente une structure gélifiée continue, sans précipitation de caséine. Les échantillons sont soumis à la mesure de la force de gel au moyen d'un analyseur de texture «Stevens type LFRA 1000» dans les conditions ci-dessous:
– Plongeur cylindrique, diamètre : 38,1 mm
– Vitesse de pénétration : 2 mm/seconde
– Hauteur de pénétration : 15 mm

Les résultat sont groupés dans le tableau 1 qui suit, ainsi que les compositions des produits laitiers après acidification et concentration.

c- Fouettage
200 ml de produit thermisé à 100°C/10 secondes sont soumis à un fouettage de 6 minutes dans un batteur ménager. On obtient une mousse ayant une densité de 0,22 et un taux de foisonnement de 4,75 fois. La mousse conservée au réfrigérateur est stable pendant 24 heures.

Tableau 1

| Composition du produit laitier | Lait acidifié | Rétentat |
|---|---|---|
| Matière sèche g/l | 84,5 | 104,5 |
| Matières azotées g/l | 32,0 | 47,4 |
| Matières azotées totales (N × 6,38) % E.S. | 37,9 | 45,3 |
| pH | 3,4 | 3,45 |

## Tableau 1 (suite)

| Composition du produit laitier | Lait acidifié | Rétentat |
|---|---|---|
| Force du gel (rétentat traité à 63°C/30 min.) en grammes | – | 225 |
| Force du gel (rétentat traité à 100°C/10 sec.) en grammes | – | 390 |
| Force du gel du rétentat non chauffé, en grammes | – | 25 |
| Taux de foisonnement | – | 4,75 |
| Densité de la mousse | – | 0,22 |

E.S. = Extrait Sec

Exemple 2

Préparation du lait acidifié et concentré

2 litres de lait écrémé sont acidifiés à pH 3,25 par échange d'ions avec une résine échangeuse de cations sous forme H⁺ «Dow 88»® à une température de 2°C.

Le lait acidifié est soumis à une ultrafiltration à 10°C jusqu'à un facteur de concentration volumique de 2.

Préparation du produit aromatisé

A 250 g de lait acidifié concentré par ultrafiltration sont ajoutés:
2,5 g de concentré d'orange 65° BRIX
10 g de jus de fruit de la passion
17,5 g de saccharose.
Le mélange peut être renforcé par addition d'une quantité désirée d'arômes.

Préparation du produit gélifié

Le mélange aromatisé est soumis à un traitement thermique de 90°C pendant 30 secondes. Après refroidissement, on obtient un produit lacté gélifié aromatisé dont la force de gel mesurée dans les conditions précédemment décrites est de 395 grammes.

**Revendications pour les états contractants: BE, CH, DE, GB, IT, LT, NL, SE.**

1. Procédé de fabrication d'un produit laitier acidifié apte à la gélification et au fouettage, caractérisé en ce qu'il comporte les étapes suivantes:
– une étape d'acidification de lait entier ou écrémé ou de babeurre de lait jusqu'à un pH inférieur ou égal à 3,8, ladite acidification étant réalisée par échange d'ions avec une résine échangeuse de cations sous forme H⁺, soit à une température de 0° à 4°C, soit en présence d'un fond de cuve constitué par du lait préalablement acidifié à un pH inférieur à 3,8,
– suivie d'une étape de concentration du produit acidifié obtenu jusqu'à une teneur en matières protéiques d'au moins 45 g/kg et pouvant atteindre 100 g/kg, ladite concentration étant réalisée par ultrafiltration ou par osmose inverse.

2. Procédé selon la revendication 1, caractérisé en ce que le lait est acidifié à un pH de 2,5 à 3,8, de préférence de 3 à 3,5.

3. Procédé selon l'une des revendications 1 ou 2, caractérisé en ce que le produit acidifié est concentré jusqu'à une teneur en matières protéiques de 45 à 80 g/kg.

4. Procédé selon l'une des revendications 1 ou 2, caractérisé en ce que le produit acidifié est concentré à une concentration volumique de 1,5 à 2,5.

5. Procédé selon l'une quelconque des revendications 1 à 4, caractérisé en ce que le produit acidifié et concentré est soumis à un traitement thermique à une température comprise entre 60°C et 145°C pendant une durée de quelques secondes à 30 minutes pour obtenir une structure gélifiée, continue, réversible, de longue durée de conservation.

6. Procédé selon la revendication 5, caractérisé en ce que le traitement thermique se fait à une température de 90° à 125°C pendant 5 à 30 secondes.

7. Procédé selon l'une des revendications 5 ou 6, caractérisé en ce que le produit acidifié concentré et traité thermiquement est soumis à un fouettage pour obtenir une mousse stable.

8. Procédé selon l'une quelconque des revendications 1 à 4, caractérisé en ce que le produit acidifié et concentré est transformé en poudre par séchage.

9. Procédé selon l'une quelconque des revendications 1 à 4, caractérisé en ce que le produit acidifié et concentré est soumis à une hydrolyse pour transformer le lactose du lait en glucose.

10. Procédé selon l'une quelconque des revendications 1 à 4, caractérisé en ce que le produit acidifié et concentré est aromatisé par addition de fruits ou de jus de fruits avant son traitement thermique selon la revendication 5.

11. Produit laitier obtenu selon le procédé de l'une quelconque des revendications 1 à 4, 8 et 9.

12. Produit laitier gélifié obtenu selon le procédé de l'une quelconque des revendications 5, 6 ou 10.

13. Produit laitier obtenu selon le procédé de la revendication 7.

14. Desserts lactés acidifiés obtenus à partir du produit laitier selon l'une des revendications 11 à 13.

**Revendication pour l'état contractant: AT**

1. Procédé de fabrication d'un produit laitier acidifié apte à la gélification et au fouettage, caractérisé en ce qu'il comporte les étapes suivantes:
– une étape d'acidification de lait entier ou écrémé ou de babeurre de lait jusqu'à un pH inférieur ou égal à 3,8, ladite acidification étant réalisée par échange d'ions avec une résine échangeuse de cations sous forme H⁺, soit à une température de 0° à 4°C, soit en présence d'un fond de cuve constitué par du lait préalablement acidifié à un pH inférieur à 3,8,
- suivie d'une étape de concentration du produit acidifié obtenu jusqu'à une teneur en matières protéiques d'au moins 45 g/kg et pouvant atteindre 100 g/kg, ladite concentration étant réalisée par ultrafiltration ou par osmose inverse.

2. Procédé selon la revendication 1, caractérisé en ce que le lait est acidifié à un pH de 2,5 à 3,8, de préférence de 3 à 3,5.

3. Procédé selon l'une des revendications 1 ou 2, caractérisé en ce que le produit acidifié est concentré jusqu'à une teneur en matières protéiques de 45 à 80 g/kg.

4. Procédé selon l'une des revendications 1 ou 2, caractérisé en ce que le produit acidifié est concentré à une concentration volumique de 1,5 à 2,5.

5. Procédé selon l'une quelconque des revendications 1 à 4, caractérisé en ce que le produit acidifié et concentré est soumis à un traitement thermique à une température comprise entre 60°C et 145°C pendant une durée de quelques secondes à 30 minutes pour obtenir une structure gélifiée, continue, réversible, de longue durée de conservation.

6. Procédé selon la revendication 5, caractérisé en ce que le traitement thermique se fait à une température de 90°C à 125°C pendant 5 à 30 secondes.

7. Procédé selon l'une des revendications 5 ou 6, caractérisé en ce que le produit acidifié concentré et traité thermiquement est soumis à un fouettage pour obtenir une mousse stable.

8. Procédé selon l'une quelconque des revendications 1 à 4, caractérisé en ce que le produit acidifié et concentré est transformé en poudre par séchage.

9. Procédé selon l'une quelconque des revendications 1 à 4, caractérisé en ce que le produit acidifié et concentré est soumis à une hydrolyse pour transformer le lactose du lait en glucose.

10. Procédé selon l'une quelconque des revendications 1 à 4, caractérisé en ce que le produit acidifié et concentré est aromatisé par addition de fruits ou de jus de fruits avant son traitement thermique selon la revendication 5.

## Patentansprüche für die Vertragsstaaten: BE, CH, DE, GB, IT, LI, NL, SE

1. Verfahren zur Herstellung eines Sauermilchproduktes, das zum Eindicken und Aufschlagen geeignet ist, dadurch gekennzeichnet, dass es die folgenden Stufen umfasst:
- eine Stufe der Ansäuerung von Voll- oder Magermilch oder von Buttermilch auf einen pH von unter oder gleich 3,8, welche Ansäuerung durch Ionenaustausch mit einem Kationenaustauscherharz in H+-Form entweder bei einer Temperatur von 0° bis 4°C oder in Gegenwart eines von zuvor auf einen pH von unter 3,8 angesäuerter Milch gebildeten Gärbottichbodens durchgeführt wird,
- gefolgt von einer Stufe der Konzentration des erhaltenen angesäuerten Produktes auf einen Gehalt an Eiweissstoffen von mindestens 45 g/kg, der bis zu 100 g/kg erreichen kann, welche Konzentration mittels Ultrafiltration oder Umkehrosmose erfolgt.

2. Verfahren nach Anspruch 1, dadurch gekennzeichnet, dass die Milch auf einen pH von 2,5 bis 3,8, vorzugsweise von 3 bis 3,5 sauer gemacht wird.

3. Verfahren nach einem der Ansprüche 1 oder 2, dadurch gekennzeichnet, dass das angesäuerte Produkt auf einen Gehalt an Eiweissstoffen von 45 bis 80 g/kg konzentriert wird.

4. Verfahren nach einem der Ansprüche 1 oder 2, dadurch gekennzeichnet, dass das angesäuerte Produkt auf eine Volumenkonzentration von 1,5 bis 2,5 konzentriert wird.

5. Verfahren nach einem der Ansprüche 1 bis 4, dadurch gekennzeichnet, dass das angesäuerte und konzentrierte Produkt einer Wärmebehandlung bei einer Temperatur zwischen 60°C und 145°C während einer Dauer von wenigen Sekunden bis 30 Minuten unterzogen wird, um eine eingedickte, durchgehende, umkehrbare Struktur von langer Haltbarkeit zu erhalten.

6. Verfahren nach Anspruch 5, dadurch gekennzeichnet, dass die Wärmebehandlung bei einer Temperatur von 90° bis 125°C während 5 bis 30 Sekunden erfolgt.

7. Verfahren nach einem der Ansprüche 5 oder 6, dadurch gekennzeichnet, dass das konzentrierte und wärmebehandelte angesäuerte Produkt zur Erzielung eines beständigen Schaums aufgeschlagen wird.

8. Verfahren nach einem der Ansprüche 1 bis 4, dadurch gekennzeichnet, dass das angesäuerte und konzentrierte Produkt durch Trocknen in ein Pulver übergeführt wird.

9. Verfahren nach einem der Ansprüche 1 bis 4, dadurch gekennzeichnet, dass das angesäuerte und konzentrierte Produkt zur Umwandlung der Laktose der Milch in Glukose einer Hydrolyse unterzogen wird.

10. Verfahren nach einem der Ansprüche 1 bis 4, dadurch gekennzeichnet, dass das angesäuerte und konzentrierte Produkt durch Zusatz von Früchten oder Obstsaft vor der Wärmebehandlung nach Anspruch 5 aromatisiert wird.

11. Milchprodukt, erhalten gemäss dem Verfahren nach einem der Ansprüche 1 bis 4, 8 und 9.

12. Eingedicktes Milchprodukt, erhalten gemäss dem Verfahren nach einem der Ansprüche 5, 6 oder 10.

13. Milchprodukt, erhalten gemäss dem Verfahren nach Anspruch 7.

14. Sauermilch-Desserts, erhalten aus dem Milchprodukt gemäss einem der Ansprüche 11 bis 13.

## Patentansprüche für den Vertragsstaat AT

1. Verfahren zur Herstellung eines Sauermilchproduktes, das zum Eindicken und Aufschlagen geeignet ist, dadurch gekennzeichnet, dass es die folgenden Stufen umfasst:

– eine Stufe der Ansäuerung von Voll- oder Magermilch oder von Buttermilch auf einen pH von unter oder gleich 3,8, welche Ansäuerung durch Ionenaustausch mit einem Kationenaustauscherharz in H⁺-Form entweder bei einer Temperatur von 0° bis 4°C oder in Gegenwart eines von zuvor auf einen pH von unter 3,8 angesäuerter Milch gebildeten Gärbottichbodens durchgeführt wird,

– gefolgt von einer Stufe der Konzentration des erhaltenen angesäuerten Produktes auf einen Gehalt an Eiweissstoffen von mindestens 45 g/kg, der bis zu 100 g/kg erreichen kann, welche Konzentration mittels Ultrafiltration oder Umkehrosmose erfolgt.

2. Verfahren nach Anspruch 1, dadurch gekennzeichnet, dass die Milch auf einen pH von 2,5 bis 3,8, vorzugsweise von 3 bis 3,5 sauer gemacht wird.

3. Verfahren nach einem der Ansprüche 1 oder 2, dadurch gekennzeichnet, dass das angesäuerte Produkt auf einen Gehalt an Eiweissstoffen von 45 bis 80 g/kg konzentriert wird.

4. Verfahren nach einem der Ansprüche 1 oder 2, dadurch gekennzeichnet, dass das angesäuerte Produkt auf eine Volumenkonzentration von 1,5 bis 2,5 konzentriert wird.

5. Verfahren nach einem der Ansprüche 1 bis 4, dadurch gekennzeichnet, dass das angesäuerte und konzentrierte Produkt einer Wärmebehandlung bei einer Temperatur zwischen 60°C und 145°C während einer Dauer von wenigen Sekunden bis 30 Minuten unterzogen wird, um eine eingedickte, durchgehende, umkehrbare Struktur von langer Haltbarkeit zu erhalten.

6. Verfahren nach Anspruch 5, dadurch gekennzeichnet, dass die Wärmebehandlung bei einer Temperatur von 90° bis 125°C während 5 bis 30 Sekunden erfolgt.

7. Verfahren nach einem der Ansprüche 5 oder 6, dadurch gekennzeichnet, dass das konzentrierte und wärmebehandelte angesäuerte Produkt zur Erzielung eines beständigen Schaums aufgeschlagen wird.

8. Verfahren nach einem der Ansprüche 1 bis 4, dadurch gekennzeichnet, dass das angesäuerte und konzentrierte Produkt durch Trocknen in ein Pulver übergeführt wird.

9. Verfahren nach einem der Ansprüche 1 bis 4, dadurch gekennzeichnet, dass das angesäuerte und konzentrierte Produkt zur Umwandlung der Laktose der Milch in Glukose einer Hydrolyse unterzogen wird.

10. Verfahren nach einem der Ansprüche 1 bis 4, dadurch gekennzeichnet, dass das angesäuerte und konzentrierte Produkt durch Zusatz von Früchten oder Obstsaft vor der Wärmebehandlung nach Anspruch 5 aromatisiert wird.

**Claims for the Contracting States: BE, CH, DE, GB, IT, LI, NL, SE.**

1. Process for the manufacture of an acidified dairy product suitable for gelling and for whipping, characterized in that it comprises the following stages:

– a stage of acidifying whole or skimmed milk or of buttermilk to a pH below or equal to 3.8, the said acidifying being carried out by ion exchange with a cation exchange resin in H⁺ form, either at a temperature of 0° to 4°C, or in the presence of a tailing consisting of milk previously acidified to a pH below 3.8,

– followed by a stage of concentrating the acidified product obtained to a protein content of at least 45 g/kg and capable of reaching 100 g/kg, the said concentration being produced by ultrafiltration or by reverse osmosis.

2. Process according to Claim 1, characterized in that the milk is acidified to a pH of 2.5 to 3.8, preferably of 3 to 3.5.

3. Process according to either of Claims 1 and 2, characterized in that the acidified product is concentrated to a protein content of 45 to 80 g/kg.

4. Process according to either of Claims 1 and 2, characterized in that the acidified product is concentrated to a volume concentration of 1.5 to 2.5.

5. Process according to any one of Claims 1 to 4, characterized in that the acidified and concentrated product is subjected to a heat treatment at a temperature of between 60°C and 145°C for a period of a few seconds to 30 minutes to produce a gelled, continuous, reversible structure with long storage life.

6. Process according to Claim 5, characterized in that the heat treatment is carried out at a temperature of 90° to 125°C for 5 to 30 seconds.

7. Process according to either of Claims 5 and 6, characterized in that the acidified concentrated and heat-treated product is subjected to a whipping to produce a stable foam.

8. Process according to any one of Claims 1 to 4, characterized in that the acidified and concentrated product is converted to powder by drying.

9. Process according to any one of Claims 1 to 4, characterized in that the acidified and concentrated product is subjected to a hydrolysis to convert the milk lactose to glucose.

10. Process according to any one of Claims 1 to 4, characterized in that the acidified and concentrated product is flavoured by addition of fruit or of fruit juice before its heat treatment according to Claim 5.

11. Dairy product obtained according to the process of any one of Claims 1 to 4, 8 and 9.

12. Gelled dairy product obtained according to the process of any one of Claims 5, 6 or 10.

13. Dairy product obtained according to the process of Claim 7.

14. Acidified milk-based desserts obtained from the dairy product according to any one of Claims 11 to 13.

**Claims for the Contracting State: AT**

1. Process for the manufacture of an acidified dairy product suitable for gelling and for whipping, characterized in that it comprises the following stages:

- a stage of acidifying whole or skimmed milk or buttermilk to a pH below or equal to 3.8, the said acidifying being carried out by ion exchange with a cation exchange resin in H$^+$ form, either at a temperature of 0° to 4°C, or in the presence of a tailing consisting of milk previously acidified to a pH below 3.8,

- followed by a stage of concentrating the acidified product obtained to a protein content of at least 45 g/kg and capable of reaching 100 g/kg, the said concentration being produced by ultrafiltration or by reverse osmosis.

2. Process according to Claim 1, characterized in that the milk acidified to a pH of 2.5 to 3.8, preferably of 3 to 3.5.

3. Process according to either of Claims 1 and 2, characterized in that the acidified product is concentrated to a protein content of 45 to 80 g/kg.

4. Process according to either of Claims 1 and 2, characterized in that the acidified product is concentrated to a volume concentration of 1.5 to 2.5.

5. Process according to any one of Claims 1 to 4, characterized in that the acidified and concentrated product is subjected to a heat treatment at a temperature of between 60°C and 145°C for a period of a few seconds to 30 minutes to produce a gelled, continuous, reversible structure with long storage life.

6. Process according to Claim 5, characterized in that the heat treatment is carried out at a temperature of 90°C to 125°C for 5 to 30 seconds.

7. Process according to either of claims 5 and 6, characterized in that the acidified concentrated and heat-treated product is subjected to a whipping to produce a stable foam.

8. Process according to any one of Claims 1 to 4, characterized in that the acidified and concentrated product is converted into powder by drying.

9. Process according to any one of Claims 1 to 4, characterized in that the acidified and concentrated product is subjected to a hydrolysis to convert the milk lactose to glucose.

10. Process according to any one of Claims 1 to 4, characterized in that the acidified and concentrated product is flavoured by addition of fruit or of fruit juice before its heat treatment according to Claim 5.